# EUROPÄISCHE PATENTSCHRIFT

(11) **EP 4 057 503 B1**
(45) Veröffentlichungstag und Bekanntmachung des Hinweises auf die Patenterteilung: **20.12.2023**
(21) Anmeldenummer: 21162132.1
(22) Anmeldetag: 11.03.2021
(51) Int. Cl.: H02S 20/00

(54) **VERBINDER FÜR EINE PHOTOVOLTAIKANORDNUNG, PHOTOVOLTAIKANORDNUNG UND PHOTOVOLTAIKSYSTEM**
CONNECTOR FOR PHOTOVOLTAIC DEVICE, PHOTOVOLTAIC DEVICE AND PHOTOVOLTAIC SYSTEM
CONNECTEUR POUR UN AGENCEMENT PHOTOVOLTAÏQUE, AGENCEMENT PHOTOVOLTAÏQUE ET SYSTÈME PHOTOVOLTAÏQUE

(43) Veröffentlichungstag der Anmeldung: 14.09.2022
(73) Patentinhaber: K2 Systems GmbH, 71272 Renningen (DE)
(72) Erfinder: LITTEK, Martin, 71229 Leonberg (DE); KOCH, Bernd, 82444 Schlehdorf (DE); DANNING, Matthew, Oakland, CA 94611 (US)
(74) Vertreter: Clarenbach, Carl-Philipp

(56) Entgegenhaltungen:
- CN-A- 111 565 008
- CN-U- 205 584 091
- JP-A- 2002 173 083
- KR-A- 20150 100 251
- US-A1- 2013 240 025
- US-A1- 2020 361 578

## Beschreibung

Die Erfindung betrifft einen Verbinder für eine Photovoltaikanordnung, die mehrere jeweils einen Schwimmkörper aufweisende Photovoltaikmodule aufweist, wobei der Verbinder dazu ausgebildet ist, mindestens zwei der Photovoltaikmodule mechanisch miteinander zu verbinden, wobei der Verbinder ein Basiselement und mehrere seitlich von dem Basiselement vorstehende Koppelelemente aufweist, wobei jedes der Koppelelemente ein Befestigungsmittel zur Befestigung an einem der Photovoltaikmodule aufweist, und wobei der Verbinder zumindest ein elastisch verformbares Ausgleichselement zum Ermöglichen von Relativbewegungen von durch den Verbinder miteinander verbundenen Photovoltaikmodulen zueinander zu ermöglichen.

Außerdem betrifft die Erfindung ein Photovoltaiksystem zur Herstellung einer Photovoltaikanordnung, mit einer Vielzahl von Photovoltaikmodulen, die jeweils einen Schwimmkörper und wenigstens einen auf dem Schwimmkörper anordenbaren oder angeordneten Photovoltaikkollektor, insbesondere Solarzelle oder Solarzellenmodul, aufweisen, und mit einer Vielzahl der oben genannten Verbinder, durch welche jeweils mehrere Photovoltaikmodule oder Schwimmkörper miteinander verbindbar sind.

Weiterhin betrifft die Erfindung eine Photovoltaikanordnung, die insbesondere aus dem oben genannten Photovoltaiksystem gefertigt ist, mit wenigstens zwei Photovoltaikmodulen, die jeweils einen Schwimmkörper und wenigstens einen auf dem Schwimmkörper angeordneten Photovoltaikkollektor aufweisen, wobei die wenigstens zwei Photovoltaikmodule durch einen Verbinder relativ zueinander bewegbar und aneinander befestigt sind.

Verbinder und Photovoltaiksysteme der eingangs genannten Art sind aus dem Stand der Technik bereits bekannt. So offenbart beispielsweise die Offenlegungsschrift US 2020/0361578 A1 einen gattungsgemäßen Verbinder einer Photovoltaikanordnung. Schwimmende Photovoltaikanordnungen haben den Vorteil, dass sie auf Flächen eingesetzt oder montiert werden können, die häufig keine andere Verwendung finden. Insbesondere auf ruhigen Gewässern, wie Seen oder dergleichen, können derartige Photovoltaikanordnungen großflächig angelegt werden. Jeder Photovoltaikkollektor ist dabei auf einem Schwimmkörper montiert, wobei auf einem Schwimmkörper auch mehrere Photovoltaikkollektoren angeordnet sein können. Um die Anordnung mehrerer derartiger Schwimmkörper mit Kollektoren dauerhaft aufrechterhalten zu können, sodass beispielsweise auch eine elektrische Verbindung zwischen benachbarten Photovoltaikmodulen mechanisch nicht überlastet wird, sind benachbarte Photovoltaikmodule durch zumindest einen Verbinder derart miteinander verbunden, dass Relativbewegungen der Photovoltaikmodule zueinander bis zu einem gewissen Grad ermöglicht werden, ohne dass dabei beispielsweise die Abstände benachbarter Photovoltaikmodule zueinander einen vorbestimmten Wert überschreiten können. Selbstverständlich könnte die Verbindung auch durch starre Verbinder gewährleistet werden, welche die Photovoltaikmodule fest beziehungsweise starr miteinander verbinden, dann jedoch könnten aufgrund der gegebenenfalls großflächigen Photovoltaikanordnung mit einer Vielzahl von Photovoltaikmodulen im Betrieb mechanische Spannungen auftreten. Insbesondere dann, wenn Wellen in dem Gewässer auftreten, die durch die Photovoltaikanordnung hindurch laufen, könnten mechanische Spannungen entstehen, die zu Beschädigungen der Photovoltaikmodule und/oder der Verbinder führen. Durch die vorteilhafterweise eingesetzten Verbinder, die eine Bewegung der Photovoltaikmodule zueinander erlauben, werden derartige mechanische Spannungen sicher verhindert.

In der oben genannten Offenlegungsschrift wird ein Verbinder eingesetzt, der ein elastisch verformbares Ausgleichselement aufweist, durch welches die Relativbewegungen der Photovoltaikmodule zueinander ermöglicht werden. Dabei ist vorgesehen, dass der Verbinder mehrere seitlich vorstehende Koppelelemente aufweist, wobei die Koppelelemente durch jeweils ein elastisch verformbares Ausgleichselement in Form eines elastisch verformbaren Gelenks miteinander oder mit einem Basiselement des Verbinders verbunden sind. Damit erhält der Verbinder zwischen den Befestigungsstellen selbst eine Elastizität, die die Relativbewegungen der Photovoltaikmodule ermöglicht. In Abhängigkeit von der Ausführung des Verbinders können dabei größere oder kleinere Relativbewegungen ermöglicht werden.

Eine ähnliche Photovoltaikanordnung ist beispielsweise auch aus der Offenlegungsschrift EP 3 709 506 A1 bekannt, bei welcher benachbarte Photovoltaikmodule durch ein Federelement miteinander verbunden sind. Auch die Offenlegungsschrift CN 111565008 A offenbart ein zum Schwimmen ausgebildetes Photovoltaiksystem mit mechanisch miteinander verbundenen Photovoltaikmodulen, die jeweils einen Schwimmkörper aufweisen.

Der Erfindung liegt die Aufgabe zugrunde, einen verbesserten Verbinder zu schaffen, der einerseits eine einfache Montage und andererseits eine vorteilhafte Flexibilität oder Elastizität der Verbinder und damit eine vorteilhafte Einstellung der zulässigen Relativbewegungen der miteinander verbundenen Photovoltaikmodule gewährleistet.

Die der Erfindung zugrunde liegende Aufgabe wird durch einen Verbinder mit den Merkmalen des Anspruchs 1 gelöst. Dieser hat den Vorteil, dass das elastisch verformbare Ausgleichselement in das Befestigungsmittel zur Befestigung des Koppelelements an einem der Photovoltaikmodule integriert ist, sodass Ausgleichsbewegungen direkt an der Koppelstelle zwischen Photovoltaikmodul und Verbinder ermöglicht sind. Dadurch wird eine besonders freie Bewegung des jeweiligen Photovoltaikmoduls relativ zu dem Verbinder und damit auch relativ zu anderen mit dem Verbinder verbundenen Photovoltaikmodulen gewährleistet. Erfindungsgemäß ist dabei vorgesehen, dass das jeweilige Befestigungsmittel als Ausgleichselement ein scheibenförmiges Ringelement mit einem Außenrand und einem Innenrand aufweist, das außenrandseitig oder innenrandseitig an dem Haltearm befestigt und innenrandseitig oder außenrandseitig an dem jeweiligen Photovoltaikmodul befestigbar ist, und das zwischen Außenrand und Innenrand mehrere sich in Umfangsrichtung des Ringelements erstreckende Freischnitte aufweist, die ein elastisches Verformen des Ringelements erlauben. Das elastisch verformbare Ausgleichselement ist also als scheibenförmiges Ringelement ausgebildet. Durch die Ringform weist das Ausgleichselement einen sich über den Außenumfang erstreckenden Außenrand und einen sich über den Innenumfang erstreckenden Innenrand auf. Außenrand und Innenrand definieren dabei Umfangslinien des Ringelements. Zwischen Außenrand und Innenrand weist das scheibenförmiges Ringelement nun zumindest einen sich in Umfangsrichtung des Ringelements, also einen parallel oder nahezu parallel zu Außenrand und/oder Innenrand erstreckenden Freischnitt auf. Durch den Freischnitt wird ein Durchbruch durch das Ringelement hindurch in Axialerstreckung gebildet, der das Material des Ringelements reduziert und dessen Steifigkeit damit reduziert. Je nach Erstreckungslänge und Erstreckungsbreite des Freischnitts, sowie in Abhängigkeit von der Anzahl der insbesondere mehreren Freischnitte wird die Elastizität und damit das Verformungsvermögen des Ringelements eingestellt. Der Außenrand ist insbesondere dazu ausgebildet, an dem Koppelelement oder an dem Photovoltaikmodul befestigt zu werden und der Innenrand dazu, an dem Photovoltaikmodul oder an dem Koppelelement befestigt zu werden. Das Ausgleichselement bildet somit einen zwischen Koppelelement und Photovoltaikmodul wirkenden Lagerteller aus, der elastisch verformbar ist.

Gemäß einer bevorzugten Ausführungsform der Erfindung weist das Ringelement zumindest zwei Freischnitte auf, die sich entlang derselben Umfangslinien des Ringelements erstrecken. Das Ringelement weist theoretisch eine unendliche Anzahl von gedachten Umfangslinien auf, also Linien, die sich in Umfangsrichtung des Ringelements erstrecken und somit jeweils einen geschlossenen (gedachten) Ring bilden, also kein Anfang und kein Ende haben. Die Umfangslinien verlaufen parallel oder nahezu parallel beziehungsweise konzentrisch oder nahezu konzentrisch zu Außenrand oder Innenrand des Ringelements. Dadurch, dass zumindest zwei der Freischnitte sich entlang derselben Umfangslinie des Ringelements erstrecken, erstrecken sie sich parallel/konzentrisch oder nahezu parallel/konzentrisch zu dem Außenrand oder dem Innenrand des Ringelements auf demselben Umfang, wodurch sich vorteilhafte Elastizitäten in dem Ringelement ergeben.

Besonders bevorzugt erstrecken sich zumindest zwei der Freischnitte entlang unterschiedlicher Umfangslinien des Ringelements. Damit liegen zwei der Freischnitte beispielsweise radial beabstandet zueinander in dem Ringelement. Insbesondere können die Freischnitte dabei auch parallel beziehungsweise konzentrisch zueinander oder zumindest abschnittsweise parallel beziehungsweise konzentrisch zueinander in dem Ringelement in Umfangsrichtung verlaufen. Umso mehr Freischnitte auf unterschiedlichen Umfangslinien liegen, desto größer wird die Verformbarkeit des Ausgleichselements. Dabei bestimmen Lage und Dimensionierung des jeweiligen Freischnitts nicht nur die Elastizitätskraft des Ringelements insgesamt, sondern auch lokal, sodass durch eine entsprechende Anordnung und Ausbildung der Freischnitte zu unterschiedlichen Elastizitätswiderständen des Ringelements in unterschiedliche Richtungen führen kann.

Besonders bevorzugt erstrecken sich entlang mehrerer Umfangslinien des Ringelements jeweils mehrere der Freischnitte. Dadurch liegen auf mehreren Umfangslinien jeweils mehrere Freischnitte, sodass sich diese insbesondere zumindest abschnittsweise parallel oder konzentrisch zueinander über den Umfang des Ringelements erstrecken.

Gemäß einer bevorzugten Weiterbildung der Erfindung enden auf der jeweiligen Umfangslinie in Umfangsrichtung benachbarte Freischnitte zur Ausbildung eines elastisch verformbaren Radialstegs des Ringelements beabstandet zueinander. Der Radialstegs ist in Umfangsrichtung gesehen um ein Vielfaches kleiner oder kürzer ausgebildet als die Freischnitte, sodass der Radialsteg das Ringelement zusammenhält, die Freischnitte eine Umfangslinie also nur kurz unterbricht, und dadurch leicht elastisch verformbar ist. Hierdurch wird eine besonders hohe Elastizität des Verbinders durch das Ringelement gewährleistet.

Vorzugsweise sind Radialstege benachbarter Umfangslinien in Umfangsrichtung versetzt zueinander angeordnet. Sind auf mehreren Umfangslinien also jeweils mehrere Freischnitte ausgebildet, sodass sich auf jeder Umfangslinie mindestens einer, vorzugsweise mindestens zwei, drei oder mehr Radialstege ergeben, so liegen die Radialstege benachbarter Umfangslinien bevorzugt in Umfangsrichtung gesehen versetzt zueinander. Dadurch erfolgt eine Krafteinleitung oder Umleitung durch das Ringelement nie vollständig auf direktem radialen Wege vom Außenrand zum Innenrand oder andersherum. Vielmehr ist durch die vorteilhafte Ausbildung des Ringelements gewährleistet, dass Kraftlinien gezwungenermaßen sich auch in Umfangsrichtung des Ringelements ergeben, wodurch Feder- und Hebelwege des Ringelements vergrößert und damit die Verformbarkeit des Ringelements weiter verbessert wird, ohne dabei die Struktursicherheit in Bezug auf die Verbindung des Koppelelementes mit dem jeweiligen Photovoltaikmodul negativ zu beeinträchtigen.

Besonders bevorzugt sind auf wenigstens zwei, vorzugsweise drei oder mehr Umfangslinien des Ringelements jeweils mehrere sich in Umfangsrichtung erstreckende Freischnitte ausgebildet und die Radialstege benachbarter Freischnitte einer Umfangslinie in Umfangsrichtung versetzt zueinander angeordnet.

Besonders bevorzugt ist das Ringelement aus Kunststoff, insbesondere aus thermoplastischem Elastomer, Gummi und/oder Metall gefertigt. Selbst dann, wenn das Material des Ringelements selbst einen verhältnismäßig hohen Elastizitätskoeffizienten aufweist, wird die Elastizität des Ringelements durch den oder die vorteilhaften Freischnitte bis auf das gewünschte Maß erhöht.

Gemäß einer bevorzugten Weiterbildung der Erfindung weist das Ringelement in seinem Außenrand, also in seiner Mantelaußenwand, eine sich insbesondere über den gesamten Umfang des Ringelements erstreckende Nut auf, in welche wenigstens ein Haltesteg des Haltearms eingreift. Durch den in die Nut eingreifenden Haltesteg ist das Ringelement formschlüssig zumindest in axialer Richtung an dem Koppelelement gehalten. Dadurch ist ein unbeabsichtigtes Lösen des Ringelements von dem Koppelelement sicher verhindert. Bevorzugt erstreckt sich die Nut über den gesamten Umfang des Ringelements an dessen Außenrand, sodass eine einfache Montage des Ringelements an dem Koppelelement gewährleistet ist. Alternativ erstreckt sich die Nut nur bereichsweise über den Außenrand des Ringelements, sodass das Ringelement nur in vorbestimmten Drehpositionen an dem Koppelelement durch Eingreifen des Haltestegs in die Nut befestigbar ist. Optional weist dabei das Ringelement mehrere sich über den Außenrand erstreckende und in Umfangsrichtung voneinander beabstandete Nuten auf, in welche jeweils ein Haltesteg des Koppelelement eingreift.

Weiterhin ist bevorzugt vorgesehen, dass das Koppelelement in einem von dem Basisteil entfernten Abschnitt eine Öffnung zur Aufnahme des Ringelements aufweist, wobei das Koppelelement zumindest einen in die Öffnung vorstehenden Haltesteg zur Befestigung des Ringelements, insbesondere zum Eingreifen in die Nut des Ringelements, aufweist. Das Ringelement ist somit in die Öffnung Koppelelements einsetzbar und wird darin insbesondere durch den zumindest einen Haltesteg arretiert beziehungsweise gehalten, sodass eine formschlüssige Verbindung von Koppelelement und Ringelement gewährleistet ist. Vorzugsweise weist das Koppelelement mehrere in die Öffnung vorstehende Haltestege auf, die besonders bevorzugt gleichmäßig verteilt über den Umfang der Öffnung angeordnet sind, um eine gleichmäßige Kraftaufnahme über den Umfang des Ringelements oder der Öffnung zu gewährleisten. Vorzugsweise weist der jeweilige Haltesteg einen radial in die Öffnung vorstehenden Abschnitt sowie am Ende des radial vorstehenden Abschnitts einen axial vorstehenden Halteabschnitt auf. Durch den Halteabschnitt wird ein Hintergriffsitz für das Ringelement geboten, durch welche eine besonders feste formschlüssige Verbindung gewährleistet ist, da der Halteabschnitt auch in radialer Richtung wirkt und ein Lösen des Ringelements von dem Koppelelement weiter erschwert. Vorzugsweise weist dabei das Ringelement zumindest eine dem Halteabschnitt zuordenbar oder zugeordnete Axialaufnahme auf, in welche der Halteabschnitt einbringbar ist.

Besonders bevorzugt ist die Öffnung des Koppelelements umfangsseitig geschlossen ausgebildet, sodass die Öffnung einen geschlossenen Außenrand aufweist, der des Ringelement an seinem Außenrand vollständig umrandet. Dadurch ist eine vorteilhafte Krafteinleitung und -Übertragung gewährleistet.

Vorzugsweise weist das Koppelelement mehrere Haltestege auf oder einen sich über den gesamten Umfang der Öffnung erstreckenden Haltesteg. Durch die mehreren Haltestege ist es möglich, eine Drehsicherung zwischen Ringelement und Koppelelement zu gewährleisten, und durch den durchgehenden beziehungsweise sich über den gesamten Umfang erstreckenden Haltesteg wird die Haltekraft in axialer Richtung maximiert.

Besonders bevorzugt ist das Ringelement an das Koppelelement angespritzt, wobei es dann insbesondere auch den oder die Haltestege umgibt, sodass eine besonders feste formschlüssige Verbindung von Ringelement und Koppelelement gewährleistet ist. Dabei können auch komplexere Formen des Haltestegs, wie insbesondere ein Haltesteg mit zumindest einem axial vorstehenden Halteabschnitt, vorteilhaft durch das Ringelement bei dem Umspritzvorgang hintergriffen oder umgeben werden, wodurch sich ein besonders fester Halt ergibt.

Gemäß einer bevorzugten Ausführungsform der Erfindung weist der Innenrand des Ringelements eine Aufnahmeöffnung mit einer von einem Kreis abweichenden Kontur auf, in welche ein Befestigungsbolzen eines der Photovoltaikmodule einsteckbar ist. Der Innenrand des Ringelements, der die Aufnahmeöffnung radial begrenzt, weist also eine von einem Kreis abweichenden Kontur auf, die dann, wenn der in die Aufnahmeöffnung eingeschobene Befestigungsbolzen eine der Aufnahmeöffnung entsprechende Außenkontur aufweist, mit dem Befestigungsbolzen eine Drehsicherung ausbildet. Durch diese Drehsicherung ist ein Verdrehen des Befestigungsbolzens innerhalb des Ringelements oder des Ringelements relativ zu dem Befestigungsbolzen verhindert. Dadurch wird die Bewegungsfreiheit des Koppelelements relativ zu dem Photovoltaikmodul auf die elastische Verformbarkeit des Ringelements beschränkt. Damit werden Ausgleichsbewegungen gezielt zugelassen und unterbunden. Der Befestigungsbolzen des weiter unten erläuterten erfindungsgemäßen Photovoltaikmodulensystems weist dabei bevorzugt ebenfalls einen von dem Kreis abweichenden Querschnitt auf, dessen Außenkontur im Wesentlichen der Kontur der Aufnahmeöffnung des Ringelements entspricht.

Insbesondere ist die Kontur der Aufnahmeöffnung ovalförmig ausgebildet. Entsprechend ist vorzugsweise auch der Querschnitt des Befestigungsbolzens ovalförmig. Durch die ovale Ausbildung von Aufnahmeöffnung und Befestigungsbolzen wird eine vorteilhafte Kraftübertragung sowie eine sichere Verdrehsicherung gewährleistet. Gemäß einer alternativen Ausführungsform der Erfindung sind die Konturen von Aufnahmeöffnung und Befestigungsbolzen polygonförmig, insbesondere mehreckförmig, ausgebildet, um die formschlüssige Verdrehsicherung auszubilden.

Gemäß einer bevorzugten Weiterbildung der Erfindung ist das Koppelelement Y-förmig ausgebildet, mit einem das Ringelement tragenden Hauptarm und mit zwei von dem Hauptarm an einem von dem Ringelement entfernten Ende ausgehenden Basisarmen. Das Koppelelement weist somit drei Streben auf, die an einer Verbindungsstelle zusammenlaufen beziehungsweise die an jeweils einem ihrer Enden - in Längserstreckung gesehen - miteinander verbunden sind. Insbesondere ist das Koppelelement dabei einstückig ausgebildet, sodass eine hohe Robustheit und Formstabilität des Koppelelements gewährleistet ist. Besonders bevorzugt ist das Koppelelement als Leichtbauteil ausgebildet, das eine aus Versteifungsrippen gefertigte Stützstruktur aufweist, wodurch trotz geringem Materialaufwand und damit niedrigen Herstellungskosten und Materialkosten, eine ausreichend hohe Robustheit beziehungsweise Steifheit des Koppelelements gewährleistet ist. Insbesondere ist das Koppelelement selbst derart ausgebildet, dass es bei den im Betrieb erwarteten Kräften, die auf das Koppelelement in der Photovoltaikanordnung wirken könnten, elastisch nicht oder nur geringfügig verformt wird. Dadurch ist sichergestellt, dass die elastische Verformung und damit die Ausgleichsbewegungen zumindest im Wesentlichen allein durch das Ringelement gewährleistet werden. Dadurch kann die Elastizität der Photovoltaikanordnung durch die Verbindung des Verbinders gezielt mittels des Ringelements eingestellt und beeinflusst werden. Insbesondere ist das Koppelelement als Spritzgussteil, vorzugsweise als Kunststoff- oder als Aluminium-Spritzgussteil ausgebildet.

Weiterhin ist bevorzugt vorgesehen, dass jeder der Basisarme des einen Koppelelements mit einem Basisarm des Koppelelements des Verbinders verbindbar oder verbunden ist, um zusammen das Basiselement des Verbinders auszubilden. Das Basiselement des Verbinders ist somit kein einteiliges Element, sondern wird vielmehr durch die Basisarme der mehreren Koppelelemente des Verbinders zusammen gebildet. Dadurch ist eine flexible Anpassung des Verbinders an unterschiedliche Randbedingungen möglich, so kann beispielsweise die Anzahl der Koppelelemente in Abhängigkeit von den miteinander zu verbinden Photovoltaikmodulen erhöht oder reduziert werden. Besonders bevorzugt weisen die Basisarme Mittel zum Steckverbinden mit Basisarmen eines anderen Koppelelements auf, sodass eine einfache Montage des Verbinders jederzeit möglich ist.

Besonders bevorzugt sind alle das Basiselement des Verbinders ausbildende Koppelelemente jeweils gleich ausgebildet. Der Verbinder wird somit durch Gleichteile gefertigt beziehungsweise durch gleich ausgebildete Koppelelemente. Dadurch werden Herstellungskosten weiter reduziert und die Montage weiter vereinfacht, da eine Fehlmontage vermieden wird.

Vorzugsweise ist jeweils einer der Basisarme des jeweiligen Koppelelements länger ausgebildet als der andere der Basisarme desselben Koppelelements. Das jeweilige Koppelelement weist somit unterschiedlich lange Basisarme auf, die sich also unterschiedlich weit an dem Verbindungsbereich der drei Arme des Koppelelements erstrecken. Durch die unterschiedliche Länge der Basisarme ist eine Fehlmontage des Koppelelements an einem oder mehreren anderen Koppelelementen des Verbinders erschwert. Gemäß einer alternativen Ausführungsform der Erfindung sind die Basisarme des jeweiligen Koppelelements gleich lang ausgebildet. Hierdurch ergibt sich eine vorteilhafte Robustheit des Koppelelements, da auch die Basisarme gleich stark belastet werden können.

Besonders bevorzugt weist jeweils einer der Basisarme des jeweiligen Koppelelements auf einer Oberseite eine Vertiefung zur zumindest bereichsweisen Aufnahme eines anderen Basisarms eines anderen Koppelelements auf, und der andere Basisarm des jeweiligen Koppelelements weist auf einer Unterseite eine Vertiefung zur zumindest bereichsweisen Aufnahme des einen Basisarms eines anderen Koppelelements des Verbinders auf. Durch die Vertiefungen auf Oberseite und Unterseite unterschiedlicher Basisarme eines Koppelelements, ist eine eindeutige Zuordnung der Koppelelemente zueinander zur Ausbildung des Basiselements gewährleistet. Die Basisarme eines Koppelelements sind somit komplementär zueinander ausgebildet, sodass eine insbesondere eine formschlüssige Verbindung der Basisarme mit Basisarmen des benachbarten Koppelelements oder eines weiteren Koppelelements herstellbar oder hergestellt ist. Hierdurch wird die Robustheit des Verbinders erhöht und die Montage wird vereinfacht. Sind die Basisarme des Koppelelements gleich lang ausgebildet, so sind vorzugsweise die Vertiefungen der beiden Basisarme bevorzugt ebenfalls gleich lang ausgebildet, um eine sichere Auflage und Befestigung der Basisarme benachbarter Koppelelemente aneinander zu gewährleisten. Dadurch, dass die Vertiefungen auf unterschiedlichen Seiten des Koppelelements angeordnet sind, ist eine eindeutige Montage der Position der Koppelelemente aneinander vorgegeben.

Gemäß einer bevorzugen Ausführungsform der Erfindung weist der Verbinder vier, insbesondere genau vier, Koppelelemente auf, die zusammen das Basiselement mit ihren Basisarmen ausbilden. Dadurch ist der Verbinder vorteilhaft zwischen vier benachbarten Photovoltaikmodulen anordenbar, um diese insbesondere an ihren aufeinander zu weisen Photovoltaikmodulecken mechanisch miteinander zu verbinden. Gemäß einer weiteren Ausführungsform der Erfindung weist der Verbinder bevorzugt genau zwei Koppelelemente auf, die zusammen das Basiselement ausbilden. Die genau zwei Koppelelemente sind bevorzugt in einem Winkel von 180° zueinander ausgerichtet, alternativ in einem Winkel von beispielsweise 90° oder 120°. Der nur zwei Koppelelemente aufweisende Verbinder eignet sich beispielsweise dazu, zwei Photovoltaikmodule am Rand eines Felds von Photovoltaikmodulen miteinander zu verbinden. Gemäß einer weiteren Ausführungsform der Erfindung weist der Verbinder bevorzugt genau drei Koppelelemente auf, die beispielsweise jeweils in einem Winkel von 120° zueinander angeordnet sind. Gemäß einer weiteren Ausführungsform liegen zwei Koppelelemente in einer Linie beziehungsweise in einem Winkel von 180° zueinander ausgerichtet und das dritte Koppelelement liegt in einem Rechtenwinkel jeweils zu diesen beiden ausgerichtet. In diesem Fall dient der Verbinder beispielsweise zur Befestigung von drei Photovoltaikmodulen miteinander, deren Ecken nicht aufeinander weisen, sondern bei denen zumindest eines versetzt zu den anderen derart angeordnet ist, dass es bereichsweise neben einem ersten Photovoltaikmodul einer benachbarten Reihe und bereichsweise neben einem zweiten Photovoltaikmodul der benachbarten Reihe liegt.

Vorzugsweise schließen die Basisarme des jeweiligen Koppelelements dabei einen Winkel von 90° oder nahezu 90° zwischen sich ein. Das Basiselement erhält dadurch eine quadratische oder zumindest rechteckförmige Kontur, die das Übertragen auch hoher Kräfte sicher gewährleistet. Da das Basiselement durch die Basisarme ausgebildet wird, ergibt sich, dass das Basiselement selbst ringförmig ausgebildet ist und eine mittige Öffnung oder Aussparung aufweist. Diese Aussparung ist dazu beispielsweise nutzbar, einen Anker für das schwimmende Photovoltaiksystem an dem Verbinder zu befestigen. Dazu kann beispielsweise der Anker mit einer Schlaufe an einem der Basisarme beziehungsweise an dem Basiselement gehalten werden. Auch ist es denkbar, in die Aufnahme des Basiselements einen Einsatz einzulegen, der bereichsweise auf dem Basiselement aufliegt, und an welchem der Anker befestigbar ist. Gemäß alternativen Ausführungsformen weist der Verbinder mehr als 4, insbesondere 5 oder 6 Koppelelemente auf. Auch kann der Winkel, der zwischen den Basisarmen des jeweiligen Koppelelements eingeschlossen wird, in Abhängigkeit von Art und Anzahl der vorhandenen Koppelelemente des Verbinders unterschiedlich bestimmt werden, wobei die Basisarme des jeweiligen Koppelelements insbesondere einen Winkel von 30° bis 120° einschließen. Gemäß einer weiteren Ausführungsform der Erfindung sind die Basisarme derart ausgebildet, dass sie im zusammengefügten Zustand ein Basiselement mit einer durchgehenden Oberfläche bilden, also ein öffnungsfreies Basiselement formen. Dadurch wird die Robustheit des Verbinders weiter erhöht.

Das erfindungsgemäße Photovoltaiksystem mit den Merkmalen des Anspruchs 22 zeichnet sich dadurch aus, dass die Verbinder erfindungsgemäß ausgebildet sind. Es ergeben sich dadurch die oben bereits genannten Vorteile.

Gemäß einer bevorzugten Weiterbildung des Photovoltaiksystems weist jedes Photovoltaikmodul mindestens einen, vorzugsweise mehrere über den Umfang des jeweiligen Photovoltaikmoduls verteilt angeordnete Befestigungsbolzen auf, die in jeweils eine Aufnahmeöffnung eines Ringelements eines Verbinders einsteckbar sind. Dadurch ist eine einfache Montage des Photovoltaiksystems gewährleistet. Vorzuweise ist der oder sind die Befestigungsbolzen an dem Schwimmkörper des jeweiligen Photovoltaikmoduls befestigt. Insbesondere weisen die Schwimmkörper oder Photovoltaikmodule eine rechteckförmige, insbesondere quadratische, Grundform auf, sodass an jeder der vier Ecken des Photovoltaikmoduls oder des Schwimmkörpers jeweils ein Befestigungsbolzen angeordnet ist. Dadurch ist eine matrixartige Anordnung einer Vielzahl von Photovoltaikmodulen ermöglicht, wobei jeweils vier Photovoltaikmodule durch einen Verbinder, der vier Koppelelemente aufweist, wie vorstehend beschrieben, miteinander verbindbar sind, indem das jeweilige Ringelement mit der Aufnahmeöffnung auf jeweils einen der Befestigungsbolzen der vier Photovoltaikmodule aufgeschoben wird. Dadurch ist eine schnelle und einfache Montage der Photovoltaikanordnung gewährleistet.

Weiterhin ist bevorzugt vorgesehen, dass der jeweilige Schwimmkörper im Bereich des Befestigungsbolzens eine Vertiefung zur spielbehafteten Aufnahme eines Koppelelements aufweist. Das Koppelelement eines Verbinders liegt somit nicht einfach auf der Oberseite eines Schwimmkörpers auf, sondern in der Vertiefung des Schwimmkörpers ein, sodass eine Seitwärtsbewegung oder Schwenkbewegung relativ zu dem Befestigungsbolzen durch die Seitenwände der Vertiefung selbst verhindert ist. Dabei definiert die lichte Weite zwischen den Seitenwänden der Vertiefung das für das Koppelelement bereitgestellte Spiel in Schwenkrichtung. Durch die Vertiefung ist somit die maximale Verformbarkeit des Ringelements zumindest in Bezug auf eine Torsionierung des Ringelements auf vorteilhafte Art und Weise begrenzt. Vorzugsweise weist das Koppelelement im Bereich des Ringelements zumindest einen seitlich beziehungsweise radial vorstehenden Sicherungsvorsprung auf. Dieser dient dazu, dass er bei der Montage an einem der Photovoltaikmodule in einer Vertiefung des Photovoltaikmoduls mit beschränktem Spiel einliegt, um eine maximale Verformung des Ringelements zu begrenzen.

Besonders bevorzugt weist die Vertiefung einen Aufnahmeabschnitt zur Aufnahme des Sicherungsvorsprungs des Koppelelements auf, um auch eine laterale Verschiebung des Koppelelements relativ zu dem Befestigungsbolzen, also in radialer Richtung zusätzlich oder alternativ zur Umfangsrichtung das Bewegungsspiel begrenzt. Dadurch ist sichergestellt, dass die Belastung des Ringelements sowohl in Bezug auf mögliche Torsion als auch in Bezug auf eine laterale Verschiebung mechanisch durch das Photovoltaikmodul, insbesondere durch den jeweiligen Schwimmkörper, begrenzt ist, sodass eine Überlastung des Ringelements sicher und dauerhaft verhindert ist. Die Vertiefung des Photovoltaikmoduls, insbesondere des Schwimmkörpers, weist dazu insbesondere eine Kontur auf, die zumindest im Wesentlichen der Außenkontur des Koppelelements im Bereich des Hauptarms entspricht, wobei die lichte Weite der Vertiefung größer ist als die Außenkontur des Hauptarms, um das vorgegebene Spiel des Koppelelements relativ zu dem Photovoltaikmodul zu beschränken beziehungsweise vorzugehen.

Vorzugsweise weist der jeweilige Haltebolzen einen Axialanschlag auf, der die maximale Einstecktiefe des Haltebolzens in das Ringelement begrenzt. Dadurch wird erreicht, dass bei der Montage das Ringelement nur bis an den Axialanschlag auf den Haltebolzen aufgeschoben werden kann, sodass das Koppelelement beabstandet zu insbesondere dem Boden des Schwimmkörpers liegt. Der Haltebolzen steht somit über den Boden des Schwimmkörpers vor. Dadurch wird erreicht, dass das Koppelelement auch relativ zu dem Bogen verschwenkt beziehungsweise verkippt werden kann. Es ergibt sich somit, dass das Koppelelement relativ zu dem jeweiligen Haltebolzen oder Photovoltaikmodul verschwenkt, verdreht und verschoben werden kann. Es ergibt sich somit eine dreidimensionale Ausgleichsbewegung durch das Ringelement, das eine hohe Robustheit der Photovoltaikmodulanordnung auch bei stärkerem Wellengang gewährleistet.

Die erfindungsgemäße Photovoltaikanordnung mit den Merkmalen des Anspruchs 26 zeichnet sich durch die erfindungsgemäße Ausbildung des oder der Verbinder aus. Es ergeben sich dadurch die zuvor bereits genannten Vorteile. Insbesondere weist die Photovoltaikanordnung eine Vielzahl von schwimmenden oder zum Schwimmen ausgebildeten Photovoltaikmodulen auf, sowie eine Vielzahl von erfindungsgemäßen Verbindern, mittels welcher benachbarte Photovoltaikmodule miteinander verbunden sind. Besonders bevorzugt ist die erfindungsgemäße Photovoltaikanordnung durch das erfindungsgemäße Photovoltaiksystem hergestellt.

Weitere Vorteile und bevorzugte Merkmale und Merkmalskombinationen ergeben sich insbesondere aus dem zuvor Beschriebenen. Im Folgenden wird die Erfindung anhand der Zeichnung näher erläutert. Dazu zeigen
- Figur 1: eine vorteilhafte Photovoltaikanordnung in einer perspektivischen Darstellung,
- Figur 2: ein vorteilhafter Verbinder der Photovoltaikanordnung in einer Draufsicht,
- Figuren 3A und B: ein Koppelelement des Verbinders in unterschiedlichen Darstellungen,
- Figuren 4A und 4B: ein Ausgleichselement des Verbinders in unterschiedlichen Darstellungen,
- Figur 5: eine Schnittdarstellung der Photovoltaikanordnung, und
- Figur 6: eine perspektivische Detailansicht der Photovoltaikanordnung.

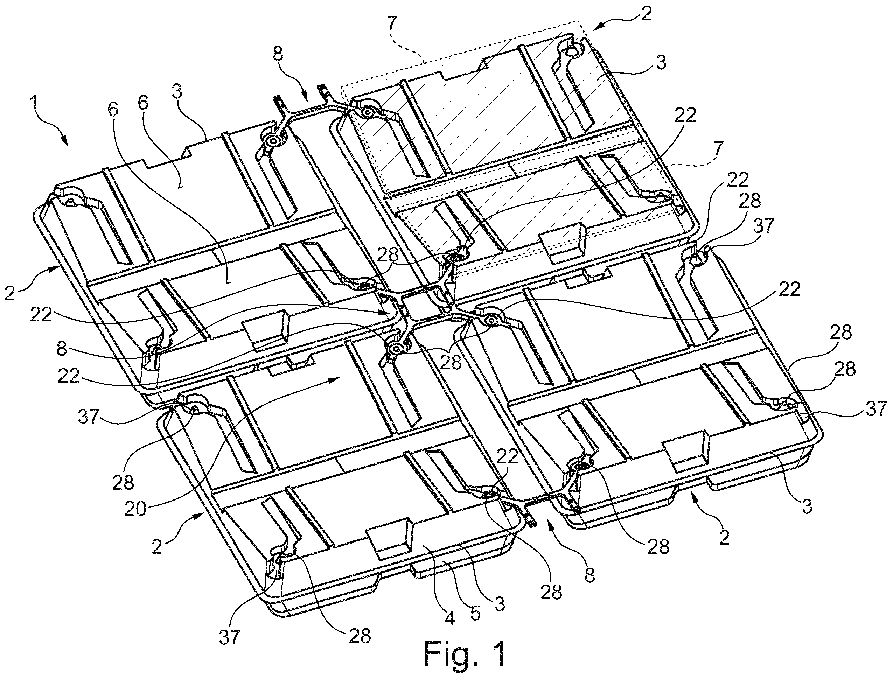

Figur 1 zeigt in einer perspektivischen Darstellung eine vorteilhafte Photovoltaikanordnung 1, die dazu ausgebildet ist, auf Wasser zu schwimmen. Dadurch ist die Photovoltaikanordnung 1 beispielsweise auf einem See oder auch auf offenem Gewässer anordenbar und einsetzbar.

Die Photovoltaikanordnung 1 weist mehrere Photovoltaikmodule 2 auf, die gleich ausgebildet sind. Jedes Photovoltaikmodul 2 weist einen Schwimmkörper 3 auf, der mehrteilig ausgebildet ist. So ist gemäß dem vorliegenden Ausführungsbeispiel vorgesehen, dass jeder Schwimmkörper 3 eine Oberschale 4 und eine Unterschale 5 aufweist. Oberschale 4 und Unterschale 5 sind jeweils wannenförmig ausgebildet und derart aneinander angeordnet, dass sie zwischen sich einen Hohlraum einschließen. Die Oberschale 4 und Unterschale 5 werden insbesondere erst bei der Montage vor Ort zusammengesetzt und weisen Verbindungsmittel auf, die ein dichtes Verbinden von Oberschale 4 und Unterschale 5 erlauben. Durch den geschaffenen Hohlraum wird den Schwimmkörpern 3 ausreichend Auftrieb verliehen, sodass sie auf dem Wasser schwimmen und nicht untergehen können. Vor der Montage können Oberschale 4 und Unterschale 5 derart gestapelt werden, dass sie bereichsweise ineinander einliegen, wodurch auf wenig Raum eine Vielzahl von Oberschalen 4 und Unterschalen 5 transportiert und bereitgestellt werden kann.

Die Oberschalen 4 weisen auf ihrer Oberseite zwei geneigt zueinander ausgerichtete Auflageflächen 6 auf, die zwischen sich einen stumpfen Winkel einschließen. Die Auflageflächen 6 sind dabei einander zugewandt, sodass die Oberschale 4 letztendlich V-förmig ausgebildet ist. Auf jeder der Auflageflächen 6 ist zumindest ein Solarkollektor oder Photovoltaikkollektor 7, insbesondere Solarzelle oder Solarzellenmodul, anordenbar oder angeordnet, wie für eines der Photovoltaikmodule 2 mit gestrichelten Linien angedeutet. Die Photovoltaikkollektoren 7 müssen durch elektrische Leitungen miteinander und/oder mit einer Anschlussstelle oder Sammelstelle verbunden sein, die insbesondere auf dem Festland angeordnet ist, und die durch die Photovoltaikkollektoren 7 erzeugte elektrische Energie aufnimmt und weiterverarbeitet.

Um den Zusammenhalt der Photovoltaikanordnung 1 dauerhaft sicherzustellen, sind die benachbarten Photovoltaikmodule 2 mechanisch miteinander verbunden. Hierzu sind Verbinder 8 vorhanden, die jeweils mindestens zwei Photovoltaikmodule 2 miteinander verbinden. Die in Figur 1 gezeigte Photovoltaikanordnung 1 weist vier der Photovoltaikmodule 2 auf, die derart angeordnet sind, dass jeweils zwei Seitenkanten der benachbarten Photovoltaikmodule 2 einander gegenüberliegend und zumindest im Wesentlichen parallel zueinander ausgerichtet sind. Dadurch ergibt sich, dass die Photovoltaikmodule 2, die eine rechteckförmige oder quadratische Grundform aufweisen, jeweils mit einer Ecke aufeinander zuweisend ausgerichtet sind. Diese einander zugewandten Ecken der Photovoltaikmodule 2 sind durch einen der Verbinder 8 miteinander verbunden.

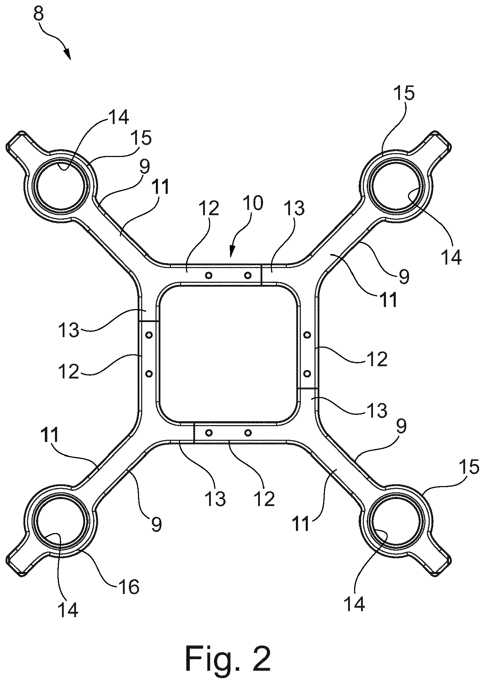

Figur 2 zeigt in einer vereinfachten Draufsicht den mittleren Verbinder 8 aus Figur 1. Der Verbinder 8 weist vier Koppelelemente 9 auf, die gleich ausgebildet und zur Befestigung an den Photovoltaikmodulen 2 ausgebildet sind. Die Koppelelemente 9 sind dabei mit einem mittig zwischen ihnen liegenden Basiselement 10 verbunden, das gemäß dem vorliegenden Ausführungsbeispiel ringförmig ausgebildet ist und eine quadratische Kontur aufweist. Jedes Koppelelement 9 weist einen seitlich von dem Basiselement 10 vorstehenden Hauptarm 11 auf, sowie zwei von dem Hauptarm 11 ausgehende Basisarme 12, 13, sodass das Koppelelement 9 insgesamt Y-förmig ausgebildet ist. Die Basisarme 12, 13 sind mit Basisarmen 13, 12 benachbarter Koppelelemente 9 verbunden und bilden dadurch das Basiselement 10 aus. Die Basisarme 12, 13 jedes Koppelelements 9 schließen dabei zwischen sich einen Winkel von 90° ein, sodass die Basisarme 12, 13 benachbarter Koppelelemente 9 sich in ihrer Längserstreckung bereichsweise oder abschnittsweise überlappen, um das ringförmige Basiselement 10 auszubilden, wie in Figur 2 gezeigt. In dem überlappenden Bereich oder Abschnitt der Basisarme 12, 13 sind die Basisarme 12, 13 beispielsweise miteinander verschraubt oder vernietet, wobei auch ein Verkleben und/oder Verschweißen alternativ oder zusätzlich möglich ist. Gemäß einem weiteren Ausführungsbeispiel, hier nicht dargestellt, sind die Koppelelemente 9 einstückig miteinander verbunden.

An ihrem von dem Basiselement 10 abgewandten Ende weisen die Hauptarme 11 jeweils eine kreisförmige Öffnung 14 auf. Im Bereich der Öffnung 14 ist der Hauptarm 11 verbreitert, wobei die Verbreiterung parallel zu der Kreisform der Öffnung 14 verläuft, sodass sich ein Haltering 15 in dem Hauptarm 11 des jeweiligen Koppelelements 9 ergibt, wobei der Haltering 15 koaxial zu der Öffnung 14 ausgebildet ist.

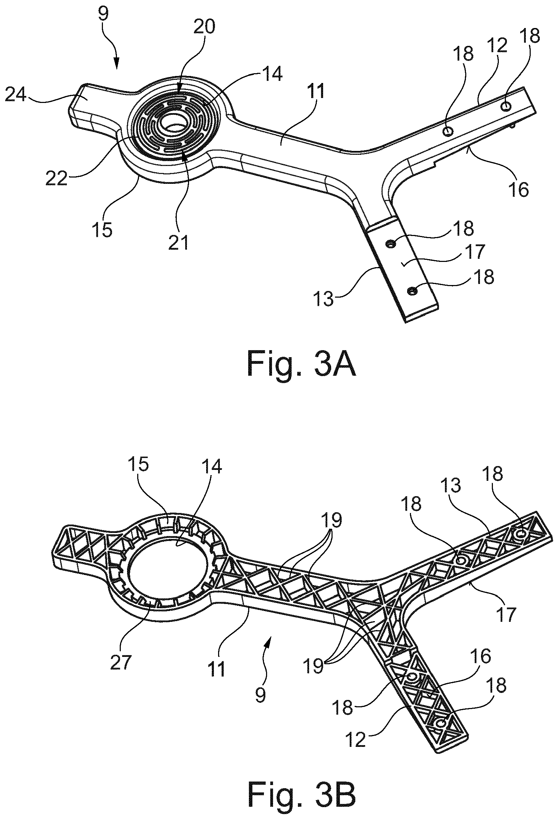

Figuren 3A und 3B zeigen eines der Koppelelemente 9 des Verbinders 8 in einer Draufsicht und in einer Unteransicht. Die Basisarme 12, 13 sind gleich lang ausgebildet, wobei der Basisarm 12 auf seiner Unterseite eine Vertiefung 16 und der Basisarme 13 auf seiner Oberseite eine Vertiefung 17 aufweist. Die Vertiefungen 16, 17 erstrecken sich jeweils über einen Längsabschnitt des jeweiligen Basisarms 12, 13 bis zu dessen freien Ende. Somit sind die Basisarme 12, 13 an ihren Endabschnitten jeweils abgeflacht ausgebildet, wobei die Abflachung auf unterschiedlichen Seiten des Koppelelements 9 liegen. Die Vertiefungen 16, 17 sind dabei derart ausgebildet, dass sie eine jeweils ebene Auflagefläche ausbilden. Dadurch wird erreicht, dass ein Basisarms 12 auf dem Basisarm 13 eines benachbarten Koppelelements 9 flächig auflegbar und damit formschlüssig mit diesem verbindbar ist. Im Bereich der sich überlappenden Basisarm-Abschnitte sind gemäß dem vorliegenden Ausführungsbeispiel Schraubenöffnungen 18 in den Basisarmen 12, 13 ausgebildet, die in Überlappungsposition miteinander bringbar sind, um eine Schraube hindurch zu führen. Insbesondere sind die Schraubenöffnungen 18 derart ausgebildet, dass in zumindest einer der Schraubenöffnungen 18 durch die Schraube ein Gewinde einschneidbar ist. Alternativ ist in eine der Schraubenöffnungen 18 des einen der Basisarme 12, 13 ein Schraubgewinde eingesetzt oder bereits eingeschnitten.

Figur 3B zeigt die Unterseite des Koppelelements 9. Vorteilhafterweise ist dieses als Leichtbauteil ausgebildet, weist also eine Wannenform auf, die vorliegend an der Unterseite durch eine Vielzahl von Stützstreben oder Versteifungsrippen 19 ergänzt ist, die die Elastizität des Koppelelements 9 reduzieren und die Robustheit erhöhen.

Nur in der Draufsicht von Figur 3A ist außerdem gezeigt, dass ein elastisch verformbares Ausgleichselement 20 in die Öffnung 14 des Hauptarms 11 eingesetzt ist. Das Ausgleichselement 20 dient außerdem als Befestigungsmittel 21 zur Befestigung des Koppelelements 9 an einem der Photovoltaikmodule 2.

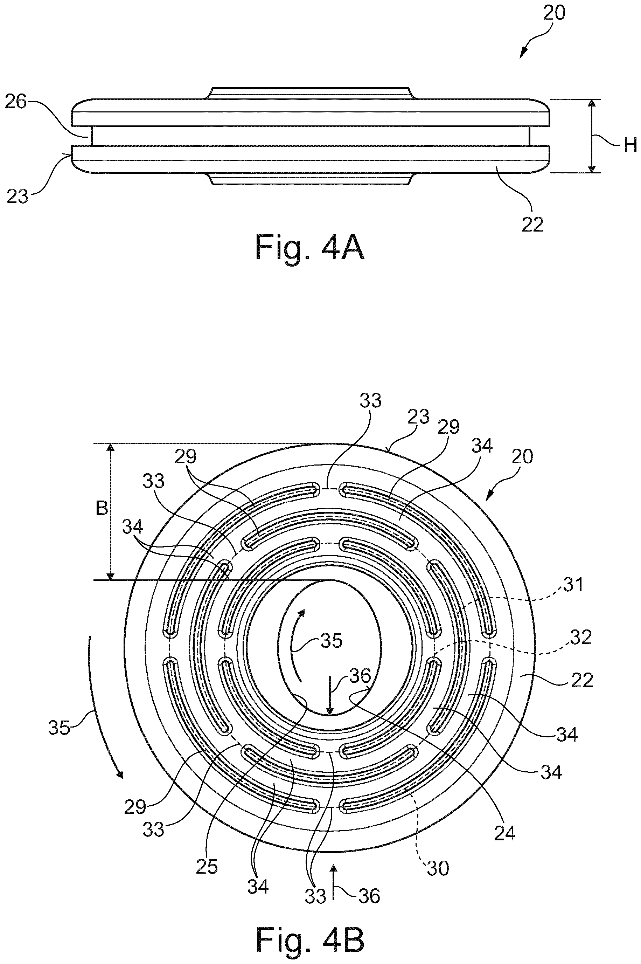

Figuren 4A und 4B zeigen das Ausgleichselement 20 in einer Seitenansicht (Figur 4A) und in einer Draufsicht (Figur 4B).

Das Ausgleichselement 20 ist als scheibenförmiges Ringelement 22 ausgebildet, das einen Außenrand 23 und einen Innenrand 24 aufweist. Außenrand 23 und Innenrand 24 sind in Umfangsrichtung jeweils geschlossen beziehungsweise durchgehend ausgebildet. Während der Außenrand 23 eine Kreisform aufweist, weist der Innenrand 24 eine von einem Kreis abweichende Kontur auf und schließt eine Aufnahmeöffnung 25 ein. Die Mindestbreite zwischen Innenrand 24 und Außenrand 23 des Ringelements 22 ist dabei um ein Mehrfaches größer als die Höhe H des Ringelements 22, wie in Figur 4A gezeigt.

Figur 4A zeigt darüber hinaus, dass das Ringelement 20 in seinem Außenrand 23 eine sich über den gesamten Umfang erstreckende Nut 26 aufweist. Die Nut 26 dient zur Befestigung des Ringelements 22 an dem Hauptarm 11 im Bereich der Öffnung 14.

Figur 3B zeigt, dass das Koppelelement 9 im Bereich der Öffnung 14 einen in die Öffnung 14 radial vorstehenden Haltesteg 27 aufweist, der sich über den gesamten Umfang der Öffnung 14 erstreckt. Der Haltesteg 27 weist eine Höhe auf, die insbesondere der Breite der Nut 26 entspricht. Im montierten Zustand greift der Haltesteg 27 in die Nut 26 des Ringelements 22 formschlüssig ein, sodass das Ringelement 22 in axialer Richtung formschlüssig an dem Koppelelement 9 befestigt ist. Weil sowohl der Außenrand 23 als auch die Öffnung 14 kreisförmig ausgebildet sind, ergibt sich dabei ein vorteilhafter und dauerhaft belastbarer Sitz des Ringelements 22 an dem Hauptarm 11.

Gemäß einem alternativen Ausführungsbeispiel sind der Öffnung 14 nicht ein durchgehender, sondern mehrere in Umfangsrichtung beabstandet zueinander angeordnete Haltestege 27 zugeordnet, die in jeweils eine Aufnahmetasche im Außenrand 23 des Ringelements 22 eingreifen, sodass zwischen dem Hauptarm 11 und dem Ringelement 22 auch eine Drehsicherung gebildet ist, die ein Verdrehen des Ringelements 22 in der Öffnung 14 verhindert.

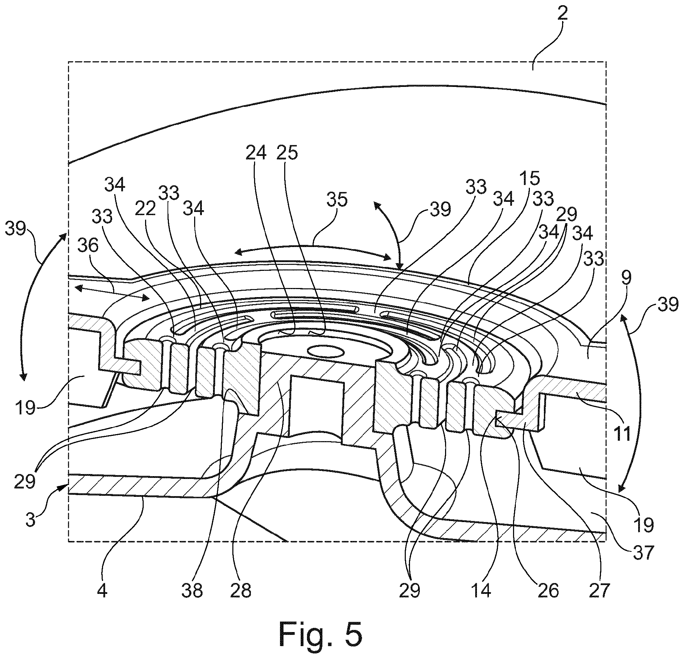

Figur 5 zeigt dazu in einer vereinfachten Schnittdarstellung, das an einem der Photovoltaikmodule 2 befestigte Koppelelement 9. Die gewählte Schnittebene liegt dabei dezentral beziehungsweise versetzt zum Mittelpunkt des Ringelements 22. Der Haltesteg 27 liegt in der Nut 26, sodass das Ringelement 22 sowohl axial als auch radial fest an dem Hauptarm 11 gehalten ist.

Der Innenrand 24 des Ringelements weist eine von einem Kreis abweichende Kontur auf und ist vorliegend oval ausgebildet. Jedes der Photovoltaikmodule 2 weist einen Befestigungsbolzen 28 auf, der dazu ausgebildet ist, mit einem der Ringelemente 22 zusammenzuwirken. Dazu weist der Befestigungsbolzen 28 bevorzugt eine Außenkontur auf, die zumindest im Wesentlichen der Kontur des Innenrands 24 entspricht, also vorliegend ebenfalls oval ausgebildet ist. Dadurch bildet der Befestigungsbolzen 28 in der Aufnahmeöffnung 25 des Ringelements 22 eine weitere Drehsicherung, die diesmal zwischen dem Photovoltaikmodul 2 beziehungsweise dem Schwimmkörper 3 und dem Ringelement 22 wirkt. Gemäß dem Ausführungsbeispiel von Figur 5 ist der Befestigungsbolzen 28 dabei einstückig mit der Oberschale 4 des Schwimmkörpers 3 ausgebildet. Gemäß einem weiteren Ausführungsbeispiel, hier nicht dargestellt, ist der Befestigungsbolzen 28 durch ein separates Element, das an dem Schwimmkörper 3 befestigt ist, gebildet.

Wie Figuren 4B und 5 weiterhin zeigen, weist das Ringelement 22 mehrere Freischnitte 29 auf, die sich axial durch das Ringelement 22 vollständig hindurch und in Umfangsrichtung des Ringelements 22 erstrecken. Dabei sind die Freischnitte 29 vorliegend auf drei Umfangslinien 30, 31, 32 verteilt angeordnet. Unter einer Umfangslinie ist in diesem Fall eine gedachte Linie zu verstehen, die sich parallel oder konzentrisch zu dem Außenrand 23 erstreckt, sich also insbesondere kreisförmig und koaxial zu dem Außenrand 23 erstreckt. Vorliegend sind in Figur 4B durch gestrichelte Linien die drei genannten Umfangslinien 30, 31 und 32 zum besseren Verständnis eingezeichnet. Gemäß dem vorliegenden Ausführungsbeispiel ist weiterhin vorgesehen, dass auf jeder der Umfangslinien 30, 31, 32 jeweils vier Freischnitte 29 ausgebildet sind, die sich entlang der jeweiligen Umfangslinie 30, 31, 32 erstrecken. Die Freischnitte jeder Umfangslinie 30, 31, 32 sind dabei jeweils gleich lang ausgebildet, wobei die Freischnitte 29 der Umfangslinie 30 sich weiter beziehungsweise länger erstrecken, als die der Umfangslinie 31, und wobei sich die Freischnitte 29 der Umfangslinie 31 länger oder weiter erstrecken, als die der Umfangslinie 32.

Die Längserstreckung der Freischnitte 29 ist dabei jeweils derart gewählt, dass in Umfangsrichtung benachbarte Freischnitte 29 derart beabstandet zueinander enden, dass zwischen ihnen ein Radialsteg 33 verbleibt, der um ein Vielfaches schmaler ist als die Freischnitte 29, sodass der jeweilige Radialsteg 33 elastisch verformbar ist. Der radiale Abstand der Umfangslinien 30, 31 und 32 ist dabei ebenfalls derart gewählt, dass radial zwischen den benachbarten Freischnitten 29 Umfangsstege 34 verbleiben, die ebenfalls elastisch verformbar sind. Die Radialstege 33 benachbarter Umfangslinien 30, 31, 32 sind dabei versetzt zueinander angeordnet, sodass in Umfangsrichtung gesehen kein radial durchgehender Radialsteg 33, der sich über alle drei Umfangslinien 30, 31, 32 hinweg erstreckt, vorhanden ist. Vielmehr ist eine radiale Verbindung der Umfangslinien 30, 31, 32 stets durch einen Freischnitt 29 mindestens einmal unterbrochen. Dadurch ist das Ringelement 22 vielseitig in verschiedene Richtungen und Formen elastisch verformbar. So können durch die Radialstege 33 und Umfangsstege 34 sowohl Torsionskräfte aufgenommen werden, die entstehen, wenn das Koppelelement 9 relativ zu dem Befestigungsbolzen 28 verdreht wird, wie durch Pfeil 35 in Figur 4B angedeutet. Darüber hinaus können die Umfangsstege 34 und Radialstege 33 derart verformt werden, dass laterale Kräfte aufgenommen werden, wenn beispielsweise das Koppelelement 9 relativ zu dem Befestigungsbolzen 28 verschoben wird, wie durch Pfeile 36 in Figur 4B angedeutet. Darüber hinaus kann das Ringelement 22 auch Kräfte ausgleichen oder aufnehmen, die nicht in der Ebene des Ringelements 22 wirken, sondern beispielsweise senkrecht dazu. Dadurch können auch Kippkräfte oder Biegekräfte aufgenommen und übertragen werden.

Durch das Ringelement 22 wird somit gewährleistet, dass sämtliche im Betrieb der Photovoltaikanordnung 1 auftretende Kräfte durch den Verbinder 8 sicher von einem Photovoltaikmodul 2 zu wenigstens einem weiteren Photovoltaikmodul 2 übertragen werden können, und dass dennoch Relativbewegungen zwischen den Photovoltaikmodulen 2 in alle Richtungen möglich sind. Dadurch ist sichergestellt, dass auch bei erhöhtem Wellengang in der Photovoltaikmodulanordnung 1 keine Spannungen oder Kräfte entstehen, die zu einer Beschädigung oder Zerstörung der Photovoltaikmodulanordnung 1 führen könnten.

Vorteilhafterweise ist dabei das Koppelelement 9 aus einem Kunststoff und/oder Metall gefertigt, beispielsweise auch aus faserverstärktem Kunststoff, und das Ringelement 22 aus einem elastisch verformbaren Material, wie beispielsweise Kunststoff, Elastomer, insbesondere thermoplastisches Elastomer, oder auch Metall. Insbesondere bei einer Ausbildung des Ringelements 22 aus Kunststoff ist es denkbar, dieses bei der Montage oder Herstellung des Verbinders 8 beziehungsweise eines Koppelelements 9 an das Koppelelement 9 anzuspritzen, sodass eine besonders dauerhaft verliersichere Anordnung des Ringelements 22 an dem Koppelelement 9 gewährleistet ist.

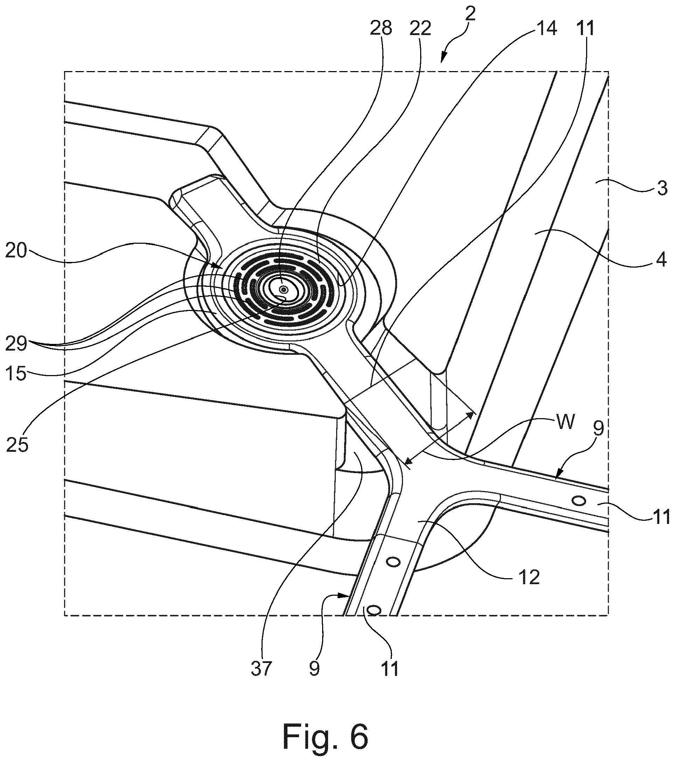

Figur 6 zeigt in einer perspektivischen Detailansicht ein an einem der Schwimmkörper 2 befestigtes Koppelelement 9. Die Oberschale 4 des Schwimmkörpers 3 weist im Bereich des Befestigungsbolzens 28 eine Vertiefung 37 auf, in welcher der Haltearm 11 bei bestimmungsgemäßer Montage abschnittsweise einliegt. Die lichte Weite W der Vertiefung ist dabei größer gewählt als die Breite des Hauptarms 11, sodass ein Verschwenken des Hauptarms 11 um den Befestigungsbolzen 28 möglich ist, wobei durch die lichte Weite W der maximale Schwenkweg formschlüssig begrenzt ist.

Auch ein über die Öffnung 14 beziehungsweise den Haltering 15 hinausstehender Fortsatz des Hauptarms 11 liegt in der Vertiefung 37 auf entsprechende Art und Weise ein und ist durch die lichte Weite W der Vertiefung 37 an einem Schwenkvorgang über den vorgegebenen Schwenkwinkel hinaus formschlüssig gehindert. Durch die Verlängerung des Hauptarms 11 ist eine erhöhte Sicherung geboten. Darüber hinaus ist im Bereich des Ringelements 22 die Vertiefung 37 ebenfalls kreisförmig ausgebildet mit einem Durchmesser, der größer ist als der Außendurchmesser des Hauptarms 11 im Bereich der Öffnung 14. Beabstandet zu dem Ringelement 22 ist die Vertiefung 37 jedoch schmaler ausgebildet, sodass ein Verschieben des Koppelelements 9 relativ zu dem Schwimmkörper 3 ebenfalls formschlüssig begrenzt ist. Dadurch, dass der Befestigungsbolzen 28 von dem Boden der Vertiefung 37 vorsteht, wie in Figur 5 gezeigt, liegt der Hauptarm 11 des Koppelelements 9 nicht flächig auf der Oberschale 4 des Schwimmkörpers 3 auf. Vielmehr ist das Koppelelement 9 axial beabstandet zu dem Boden der Vertiefung 37 angeordnet.

Dazu weist der Haltebolzen 28 einen Axialanschlag 38 auf, der die maximale Einstecktiefe des Befestigungsbolzens 28 in die Aufnahmeöffnung 25 des Ringelements 22 begrenzt, sodass das Ringelement 22 beabstandet zu dem Boden der Vertiefung 37 auf dem Axialanschlag 38 des Befestigungsbolzens 28 aufliegt. Dadurch ist gewährleistet, dass das Koppelelement 9 nicht nur relativ zu dem Schwimmkörper 3 verschwenkt und in der Ebene verschoben werden kann, sondern dass das Koppelelement 9 auch relativ zu dem Schwimmkörper 3 verkippt werden kann, wie in Figur 5 durch Pfeile 39 angezeigt.

Die Photovoltaikanordnung 1 ist vorteilhafterweise durch ein vorteilhaftes Photovoltaiksystem herstellbar, das eine Vielzahl von Schwimmkörpern 3, Photovoltaikkollektoren 7 und Verbindern 8 aufweist. Dabei können die Verbinder 8, wie in Figur 2 gezeigt, zum Verbinden von vier Photovoltaikmodulen 2 durch entsprechend vier Koppelelemente 9 gefertigt werden, oder auch nur zum Verbinden von zwei Photovoltaikmodulen 2, wie beispielhaft in Figur 1 an zwei der Verbindern 8 gezeigt. Die Ausbildung der Verbinder 8 durch die Gleichbauteile ist eine einfache Anpassung der Verbinder 8 an unterschiedliche Randbedingungen gewährleistet. Optional weist das Photovoltaiksystem außerdem Koppelelemente 9 auf, die beispielsweise zu einem dreigliedrigen Verbinder 8 führen, durch welchen nur drei Photovoltaikmodule 2 miteinander verbindbar sind. In diesem Fall schließen die Basisarme 12, 13 beispielsweise keinen rechten Winkel, sondern einen Winkel von 120° zueinander ein, um zu gewährleisten, dass die drei Koppelelemente 9 dieses Verbinders 8 fest miteinander verbunden sind und mittig ein ringförmiges Basiselement 10, ausbilden, das eine hohe Robustheit und Belastbarkeit des Photovoltaiksystems beziehungsweise der Photovoltaikanordnung 1 gewährleistet.

## Patentansprüche

1. Verbinder (8) für eine Photovoltaikanordnung (1), die mehrere jeweils einen Schwimmkörper (3) aufweisende Photovoltaikmodule (2) aufweist, wobei der Verbinder (8) dazu ausgebildet ist, mindestens zwei Photovoltaikmodule (2) mechanisch miteinander zu verbinden, wobei der Verbinder (8) ein Basiselement (10) und mehrere seitlich von dem Basiselement (10) vorstehende Koppelelemente (9) aufweist, wobei jedes der Koppelelemente (9) ein Befestigungsmittel (21) zur Befestigung an einem der Photovoltaikmodule (2) aufweist, und wobei der Verbinder (8) zumindest ein elastisch verformbares Ausgleichselement (20) zum Ermöglichen von Relativbewegungen von durch den Verbinder (8) miteinander verbundenen Photovoltaikmodulen (2) zueinander zu ermöglichen, **dadurch gekennzeichnet, dass** das jeweilige Befestigungsmittel (21) ein scheibenförmiges Ringelement (22) als Ausgleichselement (20) mit einem Außenrand (23) und einem Innenrand (24) aufweist, das außenrandseitig oder innenrandseitig an dem jeweilige Koppelelement (9) befestigt und innenrandseitig oder außenrandseitig an dem jeweiligen Photovoltaikmodul (2) befestigbar ist, und zwischen Außenrand (23) und Innenrand (24) mehrere sich in Umfangsrichtung des Ringelements (22) erstreckende Freischnitte (29) aufweist, die ein elastisches verformen des Ringelements (22) erlauben.

2. Verbinder nach Anspruch 1, **dadurch gekennzeichnet, dass** sich zumindest zwei der Freischnitte (29) entlang derselben Umfangslinie (30-32) des Ringelements (22) erstrecken.

3. Verbinder nach einem der vorhergehenden Ansprüche, **dadurch gekennzeichnet, dass** sich zumindest zwei der Freischnitte (29) entlang unterschiedlicher Umfangslinien (30-32) des Ringelements (22) erstrecken.

4. Verbinder nach einem der vorhergehenden Ansprüche, **dadurch gekennzeichnet, dass** sich entlang mehrerer Umfangslinien (30-32) des Ringelements (22) jeweils mehrere der Freischnitte (29) erstrecken.

5. Verbinder nach einem der vorhergehenden Ansprüche, **dadurch gekennzeichnet, dass** auf der jeweiligen Umfangslinie (30-32) in Umfangsrichtung benachbarte Freischnitte (29) zur Ausbildung eines elastisch verformbaren Radialstegs (33) des Ringelements (22) beabstandet zueinander enden.

6. Verbinder nach einem der vorhergehenden Ansprüche, **dadurch gekennzeichnet, dass** Radialstege (33) benachbarter Umfangslinien (30-32) in Umfangsrichtung versetzt zueinander angeordnet sind.

7. Verbinder nach einem der vorhergehenden Ansprüche, **dadurch gekennzeichnet, dass** die Freischnitte (29) auf zumindest zwei, vorzugsweise drei oder mehr Umfangslinien (30-32) des jeweiligen Ringelements (22) ausgebildet sind.

8. Verbinder nach einem der vorhergehenden Ansprüche, **dadurch gekennzeichnet, dass** das jeweilige Ringelement (22) aus Kunststoff, insbesondere thermoplastisches Elastomer, Gummi und/oder Metall gefertigt ist.

9. Verbinder nach einem der vorhergehenden Ansprüche, **dadurch gekennzeichnet, dass** das jeweilige Ringelement (22) an seinem Außenrand (23) eine sich insbesondere über den gesamten Umfang des Ringelements (22) erstreckende Nut (26) aufweist, in welche wenigstens ein Haltesteg (27) des Koppelelements (9) eingreift.

10. Verbinder nach einem der vorhergehenden Ansprüche, **dadurch gekennzeichnet, dass** das jeweilige Koppelelement (9) in einem von dem Basiselement (10) entfernten Abschnitt eine Öffnung (14) zur Aufnahme des Ringelements (22) aufweist, wobei das jeweilige Koppelelement (9) zumindest einen in die Öffnung (14) vorstehenden Haltesteg (27) zur Befestigung der Ringelemente (22) aufweist.

11. Verbinder nach einem der vorhergehenden Ansprüche, **dadurch gekennzeichnet, dass** die jeweilige Öffnung (14) umfangsseitig geschlossen ausgebildet ist.

12. Verbinder nach einem der vorhergehenden Ansprüche, **dadurch gekennzeichnet, dass** das jeweilige Koppelelement (9) mehrere Haltestege (27) aufweist oder einen sich über den gesamten Umfang der Öffnung erstreckenden Haltesteg.

13. Verbinder nach einem der vorhergehenden Ansprüche, **dadurch gekennzeichnet, dass** der Innenrand (24) des jeweiligen Ringelements (22) eine Aufnahmeöffnung (25) mit einer von einem Kreis abweichenden Kontur aufweist, in welche ein Befestigungsbolzen (28) eines der Photovoltaikmodule (2) einsteckbar ist.

14. Verbinder nach einem der vorhergehenden Ansprüche, **dadurch gekennzeichnet, dass** die Kontur ovalförmig ausgebildet ist.

15. Verbinder nach einem der vorhergehenden Ansprüche, **dadurch gekennzeichnet, dass** das jeweilige Koppelelement (9) Y-förmig ausgebildet ist, mit einem das Ringelement (22) tragenden Hauptarm (11) und mit zwei von dem Hauptarm (11) an einem von dem Ringelement (22) entfernten Ende ausgehenden Basisarmen (12,13).

16. Verbinder nach einem der vorhergehenden Ansprüche, **dadurch gekennzeichnet, dass** jeder der Basisarme (12,13) des jeweiligen Koppelelements (9) mit einem Basisarm (12,13) eines benachbarten Koppelelements (9) des Verbinders (8) verbindbar oder verbunden ist, um zusammen das Basiselement (10) des Verbinders (8) auszubilden.

17. Verbinder nach einem der vorhergehenden Ansprüche, **dadurch gekennzeichnet, dass** alle das Basiselement (10) des Verbinders (8) ausbildende Koppelelemente (9) jeweils gleich ausgebildet sind.

18. Verbinder nach einem der vorhergehenden Ansprüche, **dadurch gekennzeichnet, dass** jeweils einer der Basisarme (12,13) des jeweiligen Koppelelements (9) länger ausgebildet ist als der andere der Basisarme (13,12) desselben Koppelelements (9), oder dass die Basisarme (12,13) des jeweiligen Koppelelements (9) gleich lang ausgebildet sind.

19. Verbinder nach einem der vorhergehenden Ansprüche, **dadurch gekennzeichnet, dass** jeweils einer der Basisarme (12,13) des jeweils einen Koppelelements (9) auf einer Oberseite eine Vertiefung (17) zur zumindest bereichsweisen Aufnahme eines anderen Basisarms (13,12) eines anderen Koppelelements (9) des Verbinders (8) aufweist, und dass der andere Basisarm (13,12) des einen Koppelelements (9) auf einer Unterseite eine Vertiefung (16) zur zumindest bereichsweisen Aufnahme des einen Basisarms (12,13) eines anderen Koppelelements (9) des Verbinders (8) aufweist.

20. Verbinder nach einem der vorhergehenden Ansprüche, **dadurch gekennzeichnet, dass** der Verbinder (8) genau zwei, drei oder vier Koppelelemente (9) aufweist.

21. Verbinder nach einem der vorhergehenden Ansprüche, **dadurch gekennzeichnet, dass** die Basisarme (12,13) des jeweiligen Koppelelements (9) einen Winkel von 90° oder nahezu 90° einschließen.

22. Photovoltaiksystem zur Herstellung einer Photovoltaikanordnung (1), mit einer Vielzahl von Photovoltaikmodulen (2), die jeweils einen Schwimmkörper (3) und wenigstens einen auf dem Schwimmkörper (3) angeordneten oder anordenbaren Photovoltaikkollektor (7) aufweisen, und mit einer Vielzahl von Verbindern (8), durch welche jeweils mehrere Photovoltaikmodule (2) miteinander verbindbar sind, **gekennzeichnet durch** die Ausbildung der Verbinder (8) gemäß einem der Ansprüche 1 bis 21.

23. Photovoltaiksystem nach Anspruch 22, **dadurch gekennzeichnet, dass** der jeweilige Schwimmkörper (3) eine Vertiefung (37) zur spielbehafteten Aufnahme eines Koppelelements (9) aufweist.

24. Photovoltaiksystem nach einem der Ansprüche 22 und 23, **dadurch gekennzeichnet, dass** der jeweilige Schwimmkörper (3) mindestens ein, vorzugsweise vier Befestigungsbolzen (28) aufweist, die dazu ausgebildet sind, in die Aufnahmeöffnung (25) jeweils eines der Ringelemente (22) eingeschoben zu werden.

25. Photovoltaiksystem nach einem der Ansprüche 22 und 24, **dadurch gekennzeichnet, dass** der jeweilige Befestigungsbolzen (28) einen Axialanschlag (38) aufweist, der die maximale Einstecktiefe des Befestigungsbolzen (28) in die Aufnahmeöffnung (25) des Ringelements (22) begrenzt.

26. Photovoltaikanordnung (1), insbesondere gefertigt aus einem Photovoltaiksystem mit den Merkmalen eines der Ansprüche 22 bis 25, mit wenigstens zwei, insbesondere wenigstens vier, Photovoltaikmodulen (2), die jeweils einen Schwimmkörper (3) und wenigstens einen auf dem Schwimmkörper (3) angeordneten Photovoltaikkollektor (7) aufweisen, wobei die wenigstens zwei, insbesondere vier, Photovoltaikmodule (2) durch einen Verbinder (8) relativ zueinander bewegbar miteinander verbunden sind, **dadurch gekennzeichnet, dass** der Verbinder (8) gemäß einem der Ansprüche 1 bis 21 ausgebildet ist.

## Claims

1. Connector (8) for a photovoltaic device (1), comprising a plurality of photovoltaic modules (2) each comprising a floating body (3), wherein the connector (8) is designed to mechanically connect at least two photovoltaic modules (2) to one another, wherein the connector (8) comprises a base element (10) and a plurality of coupling elements (9) projecting laterally from the base element (10), wherein each of the coupling elements (9) comprises a fastening means (21) for fastening to one of the photovoltaic modules (2), and wherein the connector (8) comprises at least one elastically deformable compensating element (20) for allowing relative movements of photovoltaic modules (2) interconnected by the connector (8) with respect to each other, **characterized in that** the respective fastening means (21) comprises a disc-shaped ring element (22) as compensating element (20) with an outer edge (23) and an inner edge (24), which is fastened on an outer edge side or an inner edge side to the respective coupling element (9) and can be fastened on the inner edge side or the outer edge side to the respective photovoltaic module (2), and comprises a plurality of cut-outs (29) between the outer edge (23) and the inner edge (24) which extend in a circumferential direction of the ring element (22) and allow elastic deformation of the ring element (22).

2. Connector according to claim 1, **characterized in that** at least two of the cut-outs (29) extend along the same circumferential line (30-32) of the ring element (22).

3. Connector according to any one of the preceding claims, **characterized in that** at least two of the cut-outs (29) extend along different circumferential lines (30-32) of the ring element (22).

4. Connector according to any one of the preceding claims, **characterized in that** a plurality of the cut-outs (29) extend along a plurality of circumferential lines (30-32) of the ring element (22).

5. Connector according to any one of the preceding claims, **characterized in that** cut-outs (29) adjacent in the circumferential direction on the respective circumferential line (30-32) end at a distance from one another to form an elastically deformable radial ridge (33) of the ring element (22).

6. Connector according to any one of the preceding claims, **characterized in that** radial ridges (33) of adjacent circumferential lines (30-32) are offset from each other in the circumferential direction.

7. Connector according to any one of the preceding claims, **characterized in that** the cut-outs (29) are formed on at least two, preferably three or more circumferential lines (30-32) of the respective ring element (22).

8. Connector according to any one of the preceding claims, **characterized in that** the respective ring element (22) is made of plastic, in particular thermoplastic elastomer, rubber and/or metal.

9. Connector according to any one of the preceding claims, **characterized in that** the respective ring element (22) comprises a groove (26) at its outer edge (23) extending in particular over the entire circumference of the ring element (22), in which at least one retaining ridge (27) of the coupling element (9) engages.

10. Connector according to any one of the preceding claims, **characterized in that** the respective coupling element (9) comprises, in a section remote from the base element (10), an opening (14) for receiving the ring element (22), wherein the respective coupling element (9) comprises at least one retaining ridge (27) projecting into the opening (14) for fastening the ring elements (22).

11. Connector according to any one of the preceding claims, **characterized in that** the respective opening (14) is designed to be closed on the circumferential side.

12. Connector according to any one of the preceding claims, **characterized in that** the respective coupling element (9) comprises several retaining ridges (27) or one retaining ridge extending over the entire circumference of the opening.

13. Connector according to any one of the preceding claims, **characterized in that** the inner edge (24) of the respective ring element (22) comprises a receiving opening (25) with a contour deviating from a circle, into which a fastening bolt (28) of one of the photovoltaic modules (2) can be inserted.

14. Connector according to any one of the preceding claims, **characterized in that** the contour is oval-shaped.

15. Connector according to any one of the preceding claims, **characterized in that** the respective coupling element (9) is Y-shaped, with a main arm (11) carrying the ring element (22) and with two base arms (12, 13) extending from the main arm (11) at an end remote from the ring element (22).

16. Connector according to any one of the preceding claims, **characterized in that** each of the base arms (12,13) of the respective coupling element (9) is connectable or connected to a base arm (12,13) of an adjacent coupling element (9) of the connector (8) to form the base element (10) of the connector (8) together.

17. Connector according to any one of the preceding claims, **characterized in that** all coupling elements (9) forming the base element (10) of the connector (8) are each formed identically.

18. Connector according to any one of the preceding claims, **characterized in that** in each case one of the base arms (12, 13) of the respective coupling element (9) is formed longer than the other of the base arms (13, 12) of the same coupling element (9), or that the base arms (12, 13) of the respective coupling element (9) are formed of equal length.

19. Connector according to any one of the preceding claims, **characterized in that** in each case one of the base arms (12, 13) of the respective coupling element (9) comprises a recess (17) for at least partially receiving another base arm (13, 12) of another coupling element (9) of the connector (8) on an upper side, and **in that** the other base arm (13, 12) of the coupling element (9) comprises a recess (16) for at least partially receiving the one base arm (12, 13) of another coupling element (9) of the connector (8) on a lower side.

20. Connector according to any one of the preceding claims, **characterized in that** the connector (8) comprises exactly two, three or four coupling elements (9).

21. Connector according to any one of the preceding claims, **characterized in that** the base arms (12,13) of the respective coupling element (9) enclose an angle of 90° or nearly 90°.

22. Photovoltaic system for manufacturing a photovoltaic device (1), with a plurality of photovoltaic modules (2) which each comprise a floating body (3) and at least one photovoltaic collector (7) which is arranged or can be arranged on the floating body (3), and with a plurality of connectors (8) by means of which in each case a plurality of photovoltaic modules (2) can be connected to one another, **characterized by** the design of the connectors (8) according to any one of claims 1 to 21.

23. Photovoltaic system according to claim 22, **characterized in that** the respective floating body (3) comprises a recess (37) for receiving a coupling element (9) with tolerance.

24. Photovoltaic system according to any one of claims 22 and 23, **characterized in that** the respective floating body (3) comprises at least one, preferably four fastening bolts (28) which are designed to be inserted into the receiving opening (25) of a respective one of the ring elements (22).

25. Photovoltaic system according to any one of claims 22 and 24, **characterized in that** the respective fastening bolt (28) comprises an axial stop (38) which limits the maximum insertion depth of the fastening bolt (28) into the receiving opening (25) of the ring element (22).

26. Photovoltaic device (1), in particular manufactured from a photovoltaic system with the features of one of claims 22 to 25, with at least two, in particular at least four, photovoltaic modules (2), which each comprise a floating body (3) and at least one photovoltaic collector (7) arranged on the floating body (3), wherein the at least two, in particular four, photovoltaic modules (2) are connected to one another such that they can move relative to one another by means of a connector (8), **characterized in that** the connector (8) is designed according to any one of claims 1 to 21.

## Revendications

1. Connecteur (8) pour un dispositif photovoltaïque (1), qui présente plusieurs modules photovoltaïques (2) présentant respectivement un flotteur (3), dans lequel le connecteur (8) est conçu pour relier mécaniquement entre eux au moins deux modules photovoltaïques (2), dans lequel le connecteur (8) présente un élément de base (10) et plusieurs éléments de couplage (9) faisant saillie latéralement par rapport à l'élément de base (10), dans lequel chacun des éléments de couplage (9) présente un moyen de fixation (21) permettant une fixation à l'un des modules photovoltaïques (2), et dans lequel le connecteur (8) présente au moins un élément de compensation (20) élastiquement déformable afin de permettre des mouvements relatifs de modules photovoltaïques (2) reliés entre eux par le connecteur (8), **caractérisé en ce que** le moyen de fixation (21) respectif présente un élément annulaire (22) en forme de disque faisant office d'élément de compensation (20) avec un bord extérieur (23) et un bord intérieur (24), qui est fixé du côté du bord extérieur ou du côté du bord intérieur à l'élément de couplage (9) respectif et peut être fixé du côté du bord intérieur ou du côté du bord extérieur au module photovoltaïque (2) respectif, et présente entre le bord extérieur (23) et le bord intérieur (24) plusieurs découpes (29) s'étendant dans la direction périphérique de l'élément annulaire (22) et permettant une déformation élastique de l'élément annulaire (22).

2. Connecteur selon la revendication 1, **caractérisé en ce qu'**au moins deux des découpes (29) s'étendent le long de la même ligne périphérique (30 - 32) de l'élément annulaire (22).

3. Connecteur selon l'une quelconque des revendications précédentes, **caractérisé en ce qu'**au moins deux des découpes (29) s'étendent le long de lignes périphériques (30 - 32) différentes de l'élément annulaire (22).

4. Connecteur selon l'une quelconque des revendications précédentes, **caractérisé en ce que** respectivement plusieurs des découpes (29) s'étendent le long de plusieurs lignes périphériques (30 - 32) de l'élément annulaire (22).

5. Connecteur selon l'une quelconque des revendications précédentes, **caractérisé en ce que** des découpes (29) voisines dans la direction périphérique se terminent à distance les unes des autres sur la ligne périphérique (30 - 32) respective afin de former une barrette radiale (33) élastiquement déformable de l'élément annulaire (22).

6. Connecteur selon l'une quelconque des revendications précédentes, **caractérisé en ce que** des barrettes radiales (33) de lignes périphériques (30 - 32) voisines sont agencées de manière décalée les unes par rapport aux autres dans la direction périphérique.

7. Connecteur selon l'une quelconque des revendications précédentes, **caractérisé en ce que** les découpes (29) sont réalisées sur au moins deux, de manière préférée trois ou plus de trois, lignes périphériques (30 - 32) de l'élément annulaire (22) respectif.

8. Connecteur selon l'une quelconque des revendications précédentes, **caractérisé en ce que** l'élément annulaire (22) respectif est réalisé en matière plastique, en particulier en élastomère thermoplastique, en caoutchouc et/ou en métal.

9. Connecteur selon l'une quelconque des revendications précédentes, **caractérisé en ce que** l'élément annulaire (22) respectif présente sur son bord extérieur (23) une rainure (26) s'étendant en particulier sur toute la périphérie de l'élément annulaire (22) et au sein de laquelle vient en prise au moins une barrette de retenue (27) de l'élément de couplage (9).

10. Connecteur selon l'une quelconque des revendications précédentes, **caractérisé en ce que** l'élément de couplage (9) respectif présente, dans une section éloignée de l'élément de base (10), un orifice (14) permettant d'accueillir l'élément annulaire (22), dans lequel l'élément de couplage (9) respectif présente au moins une barrette de retenue (27) faisant saillie dans l'orifice (14) et permettant de fixer les éléments annulaires (22).

11. Connecteur selon l'une quelconque des revendications précédentes, **caractérisé en ce que** l'orifice (14) respectif est conçu pour être fermé du côté périphérique.

12. Connecteur selon l'une quelconque des revendications précédentes, **caractérisé en ce que** l'élément de couplage (9) respectif présente plusieurs barrettes de retenue (27) ou une barrette de retenue s'étendant sur toute la périphérie de l'orifice.

13. Connecteur selon l'une quelconque des revendications précédentes, **caractérisé en ce que** le bord intérieur (24) de l'élément annulaire (22) respectif présente un orifice d'accueil (25) avec un contour différent d'un cercle et au sein duquel peut être inséré un boulon de fixation (28) de l'un des modules photovoltaïques (2).

14. Connecteur selon l'une quelconque des revendications précédentes, **caractérisé en ce que** le contour est conçu pour être de forme ovale.

15. Connecteur selon l'une quelconque des revendications précédentes, **caractérisé en ce que** l'élément de couplage (9) respectif est conçu pour être en forme de Y, avec un bras principal (11) portant l'élément annulaire (22) et avec deux bras de base (12, 13) partant du bras principal (11) au niveau d'une extrémité éloignée de l'élément annulaire (22).

16. Connecteur selon l'une quelconque des revendications précédentes, **caractérisé en ce que** chacun des bras de base (12, 13) de l'élément de couplage (9) respectif peut être relié ou est relié à un bras de base (12, 13) d'un élément de couplage (9) voisin du connecteur (8) afin de former ensemble l'élément de base (10) du connecteur (8).

17. Connecteur selon l'une quelconque des revendications précédentes, **caractérisé en ce que** tous les éléments de couplage (9) formant l'élément de base (10) du connecteur (8) sont respectivement conçus de la même manière.

18. Connecteur selon l'une quelconque des revendications précédentes, **caractérisé en ce que** respectivement un des bras de base (12, 13) de l'élément de couplage (9) respectif est conçu pour être plus long que l'autre des bras de base (13, 12) du même élément de couplage (9), ou **en ce que** les bras de base (12, 13) de l'élément de couplage (9) respectif sont conçus pour être de la même longueur.

19. Connecteur selon l'une quelconque des revendications précédentes, **caractérisé en ce que** respectivement un des bras de base (12, 13) de respectivement un élément de couplage (9) présente sur une face supérieure un renfoncement (17) permettant un accueil au moins par endroits d'un autre bras de base (13, 12) d'un autre élément de couplage (9) du connecteur (8), et **en ce que** l'autre bras de base (13, 12) dudit élément de couplage (9) présente sur une face inférieure un renfoncement (16) permettant un accueil au moins par endroits du bras de base (12, 13) d'un autre élément de couplage (9) du connecteur (8).

20. Connecteur selon l'une quelconque des revendications précédentes, **caractérisé en ce que** le connecteur (8) présente exactement deux, trois ou quatre éléments de couplage (9).

21. Connecteur selon l'une quelconque des revendications précédentes, **caractérisé en ce que** les bras de base (12, 13) de l'élément de couplage (9) respectif forment un angle de 90° ou presque 90°.

22. Système photovoltaïque de fabrication d'un dispositif photovoltaïque (1), comprenant une pluralité de modules photovoltaïques (2) qui présentent respectivement un flotteur (3) et au moins un collecteur photovoltaïque (7) agencé ou pouvant être agencé sur le flotteur (3), et comprenant une pluralité de connecteurs (8) grâce auxquels respectivement plusieurs modules photovoltaïques (2) peuvent être reliés les uns aux autres, **caractérisé en ce que** les connecteurs (8) sont réalisés selon l'une quelconque des revendications 1 à 21.

23. Système photovoltaïque selon la revendication 22, **caractérisé en ce que** le flotteur (3) respectif présente un évidement (37) permettant un accueil, avec du jeu, d'un élément de couplage (9).

24. Système photovoltaïque selon l'une quelconque des revendications 22 et 23, **caractérisé en ce que** le flotteur (3) respectif présente au moins un, de manière préférée quatre, boulons de fixation (28) conçus pour être insérés dans l'orifice d'accueil (25) de respectivement un des éléments annulaires (22).

25. Système photovoltaïque selon l'une quelconque des revendications 22 et 24, **caractérisé en ce que** le boulon de fixation (28) respectif présente une butée axiale (38) qui limite la profondeur d'insertion maximale du boulon de fixation (28) dans l'orifice d'accueil (25) de l'élément annulaire (22).

26. Dispositif photovoltaïque (1), en particulier fabriqué à partir d'un système photovoltaïque présentant les caractéristiques de l'une quelconque des revendications 22 à 25, avec au moins deux, en particulier avec au moins quatre, modules photovoltaïques (2) qui présentent respectivement un flotteur (3) et au moins un collecteur photovoltaïque (7) agencé sur le flotteur (3), dans lequel les au moins deux, en particulier quatre, modules photovoltaïques (2) sont reliés l'un à l'autre ou les uns aux autres grâce à un connecteur (8) de manière à pouvoir être déplacés l'un par rapport à l'autre ou les uns par rapport aux autres, **caractérisé en ce que** le connecteur (8) est réalisé selon l'une quelconque des revendications 1 à 21.
